# FASCICULE DE BREVET EUROPEEN

(11) **EP 0 549 397 B1**
(45) Date de publication et mention de la délivrance du brevet: **14.06.1995**
(21) Numéro de dépôt: 92403359.0
(22) Date de dépôt: 09.12.1992
(51) Int. Cl.: F16K 17/04, F16K 15/18

(54) **Soupape de sûreté**
Sicherheitsventil
Safety valve

(30) Priorité: 23.12.1991 FR 9116332
(43) Date de publication de la demande: 30.06.1993
(73) Titulaire: ROBINETTERIE, S.F.R., S.A., F-80390 Fressenneville (FR)
(72) Inventeur: Huveteau, Jean Louis, F-80130 Friville Escarbotin (FR); Line, Gérard, F-80130 Friville Escarbotin (FR)
(74) Mandataire: Ecrepont, Robert

(56) Documents cités:
- FR-A- 2 528 526
- FR-A- 2 575 264
- GB-A- 2 203 820
- US-A- 3 027 905
- US-A- 3 757 815

## Description

L'invention se rapporte à une soupape de sureté selon le préambule de la revendication 1. Une telle soupape est connue du document GB-A-2 203 820.

On connaît une soupape de sureté (GB-A-2.203.820, US-A-3.757.815, US-A-3.027.905 et FR-A-2.575.264) comprenant un corps délimitant une chambre dans laquelle débouchent deux conduits pour un fluide dont l'écoulement est contrôlé par la soupape et une manchon logeant un ressort sollicitant constamment un clapet vers un siège consistant en un passage intercalé entre la chambre précitée et l'un des conduits dits amont.

Classiquement, le clapet présente deux faces opposées, l'une extrême qui vient obturer le passage précité et l'autre dit arrière qui reçoit la poussée d'un organe élastique qui prend appui sur une butée associée au manchon.

Classiquement, cet organe élastique est un ressort et les caractéristiques de ce ressort ainsi que la distance qui sépare la butée de la face arrière du clapet détermine la pression de tarage du clapet c'est à dire celle au dessus de laquelle le clapet est écarté de son siège sous l'effet de la pression régnant dans le circuit amont.

Pour permettre l'appui de l'élément élastique, on connaît (FR-A-2.528.526) une butée qui présente une cuvette de centrage de l'élément élastique au bord de laquelle cuvette est raccordée une jupe s'élevant concentriquement à la cuvette et dont l'extrémité libre vient s'ancrer dans l'alésage notamment au niveau d'une gorge.

Cet ancrage interdit le retrait de la butée et donc évite un échange de l'élément élastique de tarage mais n'interdit toutefois pas le réglage du tarage par un engagement différent de la butée dans l'alésage notamment plus profondément.

On connaît également des butées associées au manchon par vissage dans l'alésage.

Telles que ces soupapes sont à ce jour conçues, leur tarage est alors également réglable par vissage-dévissage de la butée.

Un tel réglage est, de nature, s'il est opéré par une personne non qualifiée ou mal intentionnée, à empêcher un fonctionnement normal de cette soupape de sécurité et donc de porter atteinte à son caractère sécuritaire et d'entraîner des dégâts importants.

Par ailleurs, les soupapes de sécurité comportent un organe de manoeuvre qui, relié au clapet par une tige de manoeuvre, permet de soulever celui-ci et donc de décharger volontairement le circuit amont, par exemple, pour une vidange de la conduite amont.

A cet effet, au manchon du corps de la soupape, doivent être associés des moyens coopérant avec ceux portés par l'organe de manoeuvre pour provoquer la manoeuvre volontaire du clapet.

Dans les solutions connues à ce jour, le clapet est solidarisé au pied de la tige de manoeuvre et, pour le montage-démontage, l'organe de manoeuvre tel une tête tournante est relié de manière démontable à la tige de manoeuvre, ce qui facilite également l'accés à la butée d'appui de l'élément élastique.

Sur la soupape de sureté (GB-A-2.203.820), la face du fond de la cuvette opposée à celle constituant l'appui porte directement le moyen coopérant avec les moyens complémentaires de commande de la manoeuvre portés par l'organe de manoeuvre.

Pour assurer le guidage du clapet, c'est, par l'intermédiaire de la tige de manoeuvre qu'on assure le guidage en translation du dit clapet.

Ce guidage et généralement réalisé à l'aide d'une pièce supplémentaire qui, à la fois, ferme le manchon et porte les moyens coopérant avec ceux de l'organe de manoeuvre.

Cette pièce supplémentaire qui est le plus souvent vissée sur le corps de soupape est facilement démontable et surtout guide la tête d'obturation à distance trop grande du clapet pour bien guider celui-ci.

Aussi, d'autres moyens supplémentaires sont nécessaires si l'on veut remédier à ce mauvais guidage.

Enfin, généralement, pour protéger les pièces logées dans le manchon des agressions par le fluide et/ou assurer un écoulement sans trop de turbulence, au clapet est associée une membrane de fermeture de l'entrée du manchon correspondant, ce qui nécessite également des moyens pour sa fixation de manière étanche sur la périphérie du manchon.

Un des résultats que l'invention vise à obtenir est une soupape dont le tarage est inviolable et dont le nombre de pièces est réduit afin d'obtenir un montage simplifié et un prix abordable.

A cet effet, l'invention a pour objet une soupape du type précité notamment caractérisée en ce que la paroi interne formant cuvette de la butée coopère localement au guidage en translation du clapet, lequel présente à cet effet une face externe de section complémentaire à celle de ladite paroi interne de la butée.

Elle sera bien comprise à l'aide de la description ci-aprés faite à titre d'exemple non limitatif en regard du dessin ci-annexé qui représente schématiquement :
- figure 1 : une soupape de sureté vue en coupe longitudinale,
- figure 2 : une vue partielle et à plus grande échelle de cette même soupape,
- figure 3 : une vue à plus grande échelle d'une variante de réalisation.

En se reportant au dessin, on voit que la soupape de sureté 1 est constituée par un corps 2 délimitant une chambre 3 dans laquelle débouchent deux conduits 4, 5 et un manchon 6 logeant un élément élastique 7 sollicitant un clapet 8 vers un siège 9 délimitant un passage intercalé entre la chambre 3 précitée et l'un 4 des conduits 4, 5 dit conduit amont.

Le clapet 8 présente deux faces opposées 10, 11, l'une 10 dite face extrême qui est la face obturante et l'autre 11 dite face arrière qui reçoit la poussée de l'élément élastique 7 prenant appui sur une butée 12 associée au manchon 6.

Le clapet 8 a la forme d'une coupelle d'appui et de centrage de l'élément élastique, laquelle coupelle s'appuie à son tour sur le siège 9 par l'intermédiaire d'un organe d'étanchéité 13.

Une membrane d'étanchéité est également prévue et son bord externe 4 est fixé sur le corps de soupape, par exemple, à la périphérie de l'entrée du manchon ou de l'entrée de la chambre et notamment est appliqué en cet endroit sur un épaulement 15, cette application étant opérée à l'aide des moyens exposés ci-aprés.

Egalement, le clapet est, par une tige de manoeuvre 16, traversant la butée 12, relié à un organe de manoeuvre 17 qui présente des moyens 18 coopérant avec des moyens complémentaires 19 solidaires du corps de la soupape, les dits moyens 18, 19 étant constitués par deux surfaces antagonistes 18, 19 ou chemins de câme qui, par déplacement de l'une sur l'autre, provoquent la manoeuvre du clapet 8 par translation parallèle à l'axe longitudinal 20 de la tige de manoeuvre 16.

De manière connue, la butée 12 comprend une cuvette 21 de centrage de l'élément élastique 7 et, au bord 22 dit bord inférieur de cette cuvette 21, est raccordée une jupe 23 s'élevant globalement concentriquement à la cuvette et par laquelle cette cuvette est associée au manchon.

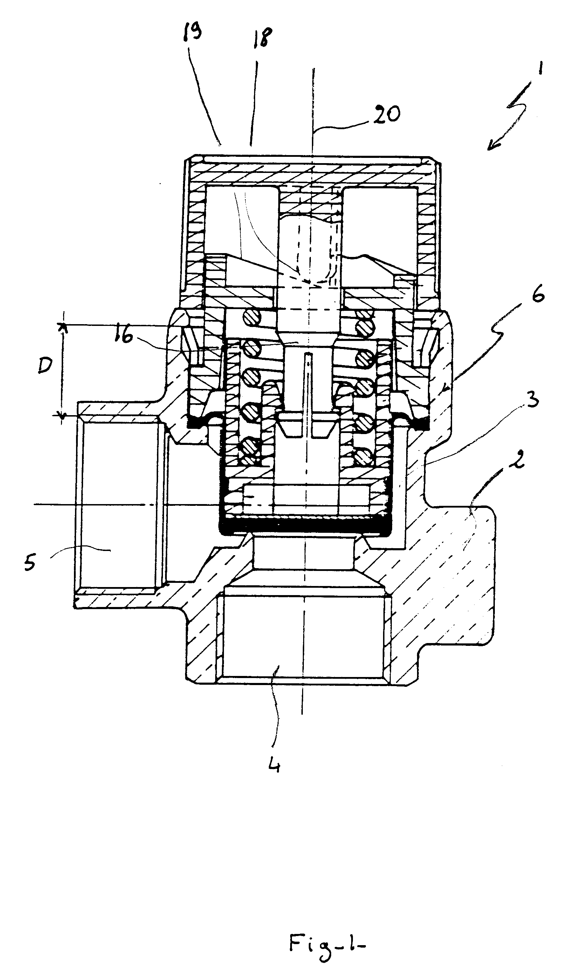

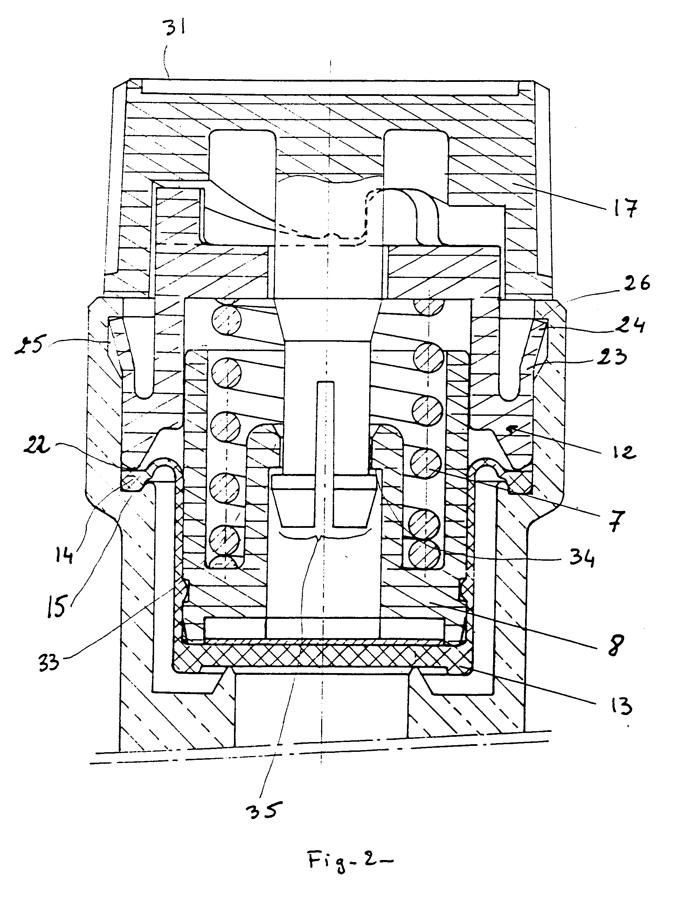

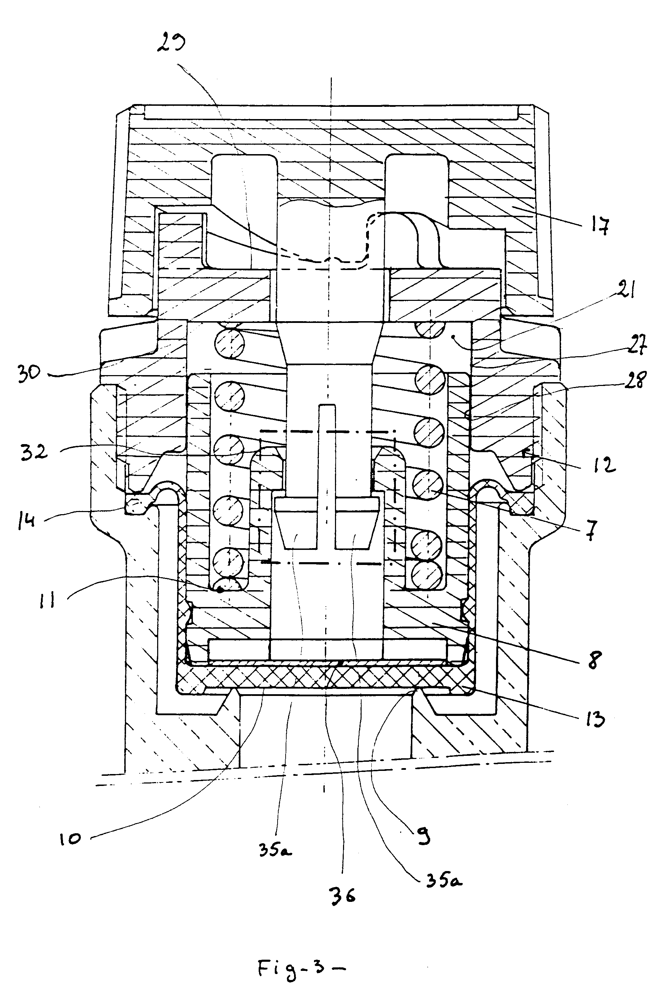

Cette association peut être réalisée par vissage de la jupe dans le manchon (figure 3) où, de préférence (figures 1 et 2), l'extrémité libre de la jupe 23 présente au moins localement un rebord 24 qui s'engage élastiquement derrière une surface 26 dite surface d'arrêt d'une gorge 25 prévue à cet effet dans l'alésage du manchon pour interdire l'extraction de la cuvette.

Egalement, la face 29 du fond de la cuvette opposée à celle 30 constituant l'appui de l'élément élastique 7 porte directement la surface 19 coopérant avec la surface complémentaire 18 de commande de la manoeuvre portée par l'organe de manoeuvre.

Selon l'invention, la paroi interne 27 de la butée 12 coopère localement au guidage en translation du clapet 8, lequel présente à cet effet une face externe 28 de section complémentaire à celle de la paroi interne 27 de la butée.

De préférence, l'organe de manoeuvre 17 est, par exemple, guidé en rotation autour d'un axe confondu avec l'axe 20 de la tige de manoeuvre.

Dans ce cas, le moyen 19 porté par la butée 12 est constitué d'au moins une rampe 31 et, de préférence, de plusieurs rampes disposées sur une même circonférence et angulairement régulièrement réparties.

Pour permettre le guidage du clapet 8 uniquement par la paroi interne 21 de la butée 12, le pied de la tige de manoeuvre du clapet est associé au clapet par un moyen de fixation 32 de type offrant au moins un degré de liberté.

De préférence, le moyen de fixation 32 du pied sur le clapet est de type à ancrage élastique irréversible.

Ce moyen de fixation est, par exemple, formé sur le clapet d'un moyeu 33 dont l'entrée présente un rétrécissement délimitant une face de butée 34 et la tige de manoeuvre se termine par une tête 35 s'engageant élastiquement derrière la dite face de butée.

Afin de présenter l'élasticité nécessaire, l'extrémité de la tige est, par exemple, scindée en au moins deux languettes élastiques 35a.

Dans la version préférentielle (figure 2) où la coupelle est montée élastiquement, selon l'invention, la distance D prise entre le bord libre 24 de la jupe et le bord inférieur 22 de la cuvette portant la dite jupe est sensiblement égale à la distance mesurée entre la surface d'arrêt 26 de la gorge 25 et le rebord 15 du corps, déduction faite de l'épaisseur de la membrane qui s'y applique.

De cette façon, lors du montage de la butée, on réalise le blocage de la membrane sans que cela nécessite la mise en oeuvre de moyens distincts.

Egalement, on est assuré du positionnement strict de la butée et ce montage évite le risque d'écrasement de la membrane et donc les risques d'endommagement.

Le montage des pièces assure directement le respect d'un certain tarage.

Lorsque l'organe de manoeuvre est mis en place, il est impossible de le démonter pour accéder au clapet sans rompre la tige de commande ce qui montrera aussitôt que la soupape est défectueuse.

On ne peut donc pas faire un échange de l'élément élastique sans que cela passe inaperçu.

De ce fait, même dans la version coupelle vissée, l'inviolabilité est assurée, cette version ayant l'avantage de permettre de constituer des cartouches tarées d'échange standard.

Grâce à cette butée multi-fonctions, le nombre de pièces nécessaires au montage de la soupape est extrêmement réduit.

En effet, cette même pièce à savoir la butée ou coupelle multi-fonctions :
- assure le tarage,
- reprend l'appui de l'élément élastique,
- maintient la membrane,
- guide le clapet d'obturateur,
- reçoit les moyens coopérant avec l'organe de manoeuvre.

Avantageusement, mais non exclusivement, la membrane 13 réalise elle-même l'organe d'étanchéité et s'insère donc entre siège et clapet.

Par exemple, pour le centrage de sa zone formant l'organe d'étanchéité, elle coiffe la face obturante et, sur une certaine hauteur, la face latérale de la cuvette formant le clapet avant de s'en écarter pour gagner l'épaulement 15 du manchon du corps de soupape.

La dite zone formant l'organe d'étanchéité pourra être raidie par une platine 36 intermédiaire, par exemple, en laiton afin de mieux résister à la pression que l'obturateur qui lui-même pourra, de ce fait, être réalisé en matière plastique moulé de même que la coupelle multi-fonctions et la tête de manoeuvre.

## Revendications

1. Soupape de sureté constituée par un corps (2) délimitant une chambre (3) dans laquelle débouchent deux conduits (4, 5) et un manchon (6) logeant un élément élastique (7) sollicitant un clapet (8) vers un siège (9) délimitant un passage intercalé entre la chambre (3) précitée et l'un (4) des conduits (4, 5) dit conduit amont,
la soupape comportant une membrane d'étanchéité dont le bord externe est fixé sur le corps (2) de la soupape,
le clapet (8) présente deux faces opposées (10, 11), l'une (10) dite face extrême qui est la face obturante et l'autre (11) dite face arrière qui reçoit la poussée de l'élément élastique (7) prenant appui sur une butée (12) associée au manchon (6),
ce clapet (8) a la forme d'une coupelle d'appui et de centrage de l'élément élastique, laquelle coupelle s'appuie à son tour sur le siège (9) par l'intermédiaire d'un organe d'étanchéité (13),
également, ce clapet est, par une tige de manoeuvre (16), traversant la butée (12), relié à un organe de manoeuvre (17) qui présente des moyens (18) coopérant avec des moyens complémentaires (19) associés au corps de la soupape, qui, par déplacement de l'un sur l'autre, provoquent la manoeuvre du clapet (8) par translation parallèle à l'axe longitudinal (20) de la tige de manoeuvre (16), les dits moyens (18, 19) étant constitués par deux surfaces antagonistes,
la butée (12) présente également une cuvette (21) de centrage de l'élément élastique (7),
la face (29) du fond de la cuvette opposée à celle (30) constituant l'appui de l'élément élastique (7) porte directement une (19) desdites surfaces antagonistes avec laquelle coopére l'autre (18) desdites surfaces, laquelle est portée par l'organe de manoeuvre (17),
cette soupape étant **CARACTERISEE** en ce que la paroi interne (27) formant cuvette de la butée (12) coopère localement au guidage en translation du clapet (8), lequel présente à cet effet une face externe (28) de section complémentaire à celle de ladite paroi interne (27) de la butée (12).

2. Soupape selon la revendication 1 **caractérisée** en ce que le moyen (19) porté par la butée (12) est constitué d'au moins une rampe (31).

3. Soupape selon la revendication 1 ou 2 **caractérisée** en ce que le pied de la tige de manoeuvre du clapet est associé au clapet par un moyen de fixation (32) de type offrant au moins un degré de liberté.

4. Soupape selon l'une quelconque des revendications 1 à 3 **caractérisée** en ce que le moyen de fixation (32) du pied sur le clapet est de type à ancrage élastique irréversible.

5. Soupape selon l'une quelconque des revendications 1 à 4 **caractérisée** en ce que sur la cuvette de centrage sur laquelle est raccordée au niveau de son bord inférieur (22) une jupe (23) s'élevant globalement concentriquement à la cuvette et l'extrémité libre de la jupe (23) présente localement un rebord (24) qui s'engage élastiquement derrière une surface (26) dite surface d'arrêt d'une gorge (25) prévue à cet effet dans l'alésage du manchon pour interdire l'extraction de la cuvette, la distance (D) prise entre le bord libre (24) de la jupe et le bord inférieur (22) de la cuvette portant la dite jupe étant sensiblement égale à la distance mesurée entre la surface d'arrêt (26) de la gorge (25) et le rebord (15) du corps, déduction faite de l'épaisseur de la membrane d'étanchéité qui s'y applique.

6. Soupape selon l'une quelconque des revendications 1 à 5 **caractérisée** en ce que la membrane d'étanchéite réalise elle-même l'organe d'étanchéité (13) et s'insère donc entre le siège et le clapet.

7. Soupape selon la revendication 6 **caracterisée** en ce que, pour le centrage de sa zone formant l'organe d'étanchéité, la membrane coiffe la face obturante et, sur une certaine hauteur, la face latérale de la cuvette avant de s'en écarter pour gagner l'épaulement (15) du manchon du corps de soupape.

8. Soupape selon la revendication 7 **caractérisée** en ce que la dite zone formant l'organe d'étanchéité est raidie par une platine intermédiaire.

## Claims

1. A safety valve comprising a body (2) delimiting a chamber (3) into which there open two conduits (4, 5) and a sleeve (6) accommodating a resilient element (7) urging a flap-type valve (8) towards a seat (9) delimiting a passage inserted between the above-mentioned chamber (3) and one (4) of the conduits (4, 5) called upstream conduit, the valve comprising a sealing diaphragm whereof the outer edge is secured to the body (2) of the valve,
the flap-type valve (8) has two opposite faces (10, 11), one (10) called limit face, which is the sealing face, and the other (11) called rear face, which receives the thrust of the resilient element (7) bearing against a stop (12) associated with the sleeve (6),
this flap-type valve (8) has the shape of a bearing and centring cup of the resilient element, said cup in turn bears on the seat (9) by means of a sealing member (13),
also, this flap-type valve is, by means of an actuating rod (16), passing through the stop (12), connected to an actuating member (17) which has means (18) cooperating with complementary means (19) associated with the valve body, which, through displacement onto the other, cause the actuation of the flap-type valve (8) by translational movement parallel to the longitudinal axis (20) of the actuating rod (16), the said means (18, 19) comprising two opposing faces, the stop (12) has also a dish (21) for centring the resilient element (7),
the face (29) of the base of the dish opposite the face (30) forming the bearing of the resilient element (7) supports directly one (19) of the said opposing surfaces with which the other (18) of the said surfaces cooperates, the latter being supported by the actuating member (17),
this valve being characterized in that the inner wall (27) forming the dish of the stop (12) cooperates locally with the translational guiding of the flap-type valve (8), which has to this end an outer face (28) having a section complementary to that of the said inner wall (27) of the stop (12).

2. A valve according to Claim 1, characterized in that the means (19) supported by the stop (12) comprises at least one ramp (31).

3. A valve according to Claim 1 or 2, characterized in that the base of the flap-type valve actuating rod is associated with the flap-type valve by a securing means (32) of the type providing at least one degree of freedom.

4. A valve according to any one of Claims 1 to 3, characterized in that the means (32) for securing the base to the flap-type valve is of the type having irreversible resilient anchoring.

5. A valve according to any one of Claims 1 to 4, characterized in that on the centring dish, to which is connected at its lower edge (22) a skirt (23) rising generally concentrically of the pan and the free end of the skirt (23) has locally a rim (24) which resiliently engages behind a surface (26), called stop surface, of a groove (25) provided to this end in the sleeve bore to prevent the dish from being withdrawn, the distance (D) between the free edge (24) of the skirt and the lower edge (22) of the dish supporting the said skirt being substantially equal to the distance measured between the stop surface (26) of the groove (25) and the rim (15) of the body, having deducted the thickness of the sealing diaphragm which fits thereon.

6. A valve according to any one of Claims 1 to 5, characterized in that the sealing diaphragm itself forms the sealing member (13) and thus is inserted between the seat and the flap-type valve.

7. A valve according to Claim 6, characterized in that, in order to centre its area forming the sealing member, the diaphragm fits over the sealing face and, at a certain height, the side face of the dish before moving away therefrom to reach the shoulder (15) of the sleeve of the valve body.

8. A valve according to Claim 7, characterized in that said area forming the sealing member is stiffened by an intermediate plate.

## Patentansprüche

1. Sicherheitsventil, bestehend aus einem Ventilkörper (2) mit darin ausgebildeter Kammer (3), in welche zwei Leitungen (4, 5) einmünden, sowie mit einer Muffe (6), in weiche ein elastisches Teil (7) eingesetzt ist, das eine Ventilklappe (8) zu einem Sitz (9) hin spannt, in weichem ein zwischen die vorgenannte Kammer (3) und eine (4) der beiden Leitungen (4, 5), nämlich der sogenannten Anströmleitung, geschalteter Durchlaß ausgebildet ist, wobei das Ventil eine Dichtungsmembran aufweist, deren Außenrand auf dem Ventilkörper (2) des Ventils befestigt ist,
bei weichem die Ventilklappe (8) zwei sich gegenüberstehende Flächen (10, 11) aufweist, von denen die eine (10), die sogenannte Endfläche, die Schließfläche darstellt, während die andere (11), die sogenannte rückwärtige Fläche, die Schubkraft des sich auf einem der Muffe (6) zugeordneten Anschlag (12) abstützenden elastischen Elements (7) aufnimmt,
wobei diese Ventilklappe (8) die Form eines gekrümmten Abstütztellers zum Zentrieren des elastischen Elemente aufweist, welcher sich seinerseits auf dem Sitz (9) über ein Dichtelement (13) abstützt,
und wobei diese Ventilklappe außerdem über eine durch den Anschlag (12) geführte Betätigungsstange (16) mit einem Betätigungselement (17) verbunden ist, weiche Mittel (8) aufweist, die mit komplementären, dem Ventilkörper zugeordneten Mitteln zusammenwirken, die durch Verschiebung aufeinander die Betätigung der Ventilklappe (8) unter Verschiebung parallel zur Längsachse (20) der Betätigungsstange (16) herbeiführen, wobei die Mittel (18, 19) aus zwei entgegenwirkenden Flächen bestehen,
während der Anschlag (12) außerdem ein schalenförmiges Element (21) zum Zentrieren des elastischen Elements (7) aufweist,
und wobei die Bodenfläche (29) des schalenförmigen Teils, die der die Auflage für das elastische Element (7) bildenden Fläche (30) gegenüberliegt, direkt eine (19) der beiden entgegenwirkenden Flächen trägt, mit welcher die andere (18) dieser Flächen zusammenwirkt, die auf dem Betätigungsteil (17) aufliegt,
**dadurch GEKENNZEICHNET**, daß die das schalenförmige Teil des Anschlags (12) bildende Innenwandung örtlich begrenzt zur Führung der Ventilklappe (8) bei deren Verschiebung zusammenwirkt, welche zu diesem Zweck eine Außenfläche (28) aufweist, deren Schnittfläche komplementär zu der der Innenwandung (27) des Anschlags (12) ist.

2. Sicherheitsventil nach Anspruch 1, **dadurch gekennzeichnet**, daß die auf dem Anschlag (12) gelagerte Einrichtung aus mindestens einer Schrägfläche (31) besteht.

3. Sicherheitsventil nach Anspruch 1 oder 2, **dadurch gekennzeichnet**, daß der Ansatz der Ventilbetätigungsstange der Ventilklappe mittels einer Befestigungseinrichtung (32) der Art zugeordnet ist, die mindestens einen Freiheitsgrad zuläßt.

4. Sicherheitsventil nach einem der Ansprüche 1 bis 3, **dadurch gekennzeichnet**, daß die Einrichtung (32) zur Befestigung des Ansatzes auf der Ventilklappe so gestaltet ist, daß sie eine nicht umkehrbare elastische Verankerung vorsieht.

5. Sicherheitsventil nach einem der Ansprüche 1 bis 4, **dadurch gekennzeichnet,** daß auf dem schalenförmigen Element zur Zentrierung in Höhe seiner unteren Kante (22) eine im großen und ganzen konzentrisch zu dem schalenförmigen Element hochstehende Zylinderfläche (23) angesetzt ist, während das freie Ende der Zylinderfläche (23) örtlich begrenzt einen Umschlag (24) aufweist, der elastisch eine Fläche (26), die sogenannte Sicherungsfläche, einer hierzu in der Bohrung der Muffe vorgesehenen Vertiefung (25) hintergreift und dabei ein Herausziehen des schalenförmigen Elements verhindert, wobei der Abstand (D) zwischen dem freien Rand (24) der Zylinderfläche und dem unteren Rand (22) des die Zylinderfläche abstützenden schalenförmigen Elements im wesentlichen gleich dem Abstand ist, der zwischen der Sicherungsfläche (26) der Vertiefung (25) und der Randleiste (15) des Ventilkörpers gemessen wird, unter Abzug der Dicke der daran anliegenden Dichtungsmembran.

6. Sicherheitsventil nach einem der Ansprüche 1 bis 5, **dadurch gekennzeichnet**, daß die Dichtungsmembran selbst das Dichtelement (13) bildet und somit zwischen den Sitz und die Ventilklappe eingesetzt ist.

7. Sicherheitsventil nach Anspruch 6, **dadurch gekennzeichnet**, daß die Membran zur Zentrierung ihres das Dichtelement bildenden Bereichs die Schließfläche und über eine bestimmte Höhe die Seitenfläche des schalenförmigen Elements überdeckt, ehe sie sich von dieser zur Erreichung der Schulter (15) der Muffe des Ventilkörpers von diesem entfernt.

8. Sicherheitsventil nach Anspruch 7, **dadurch gekennzeichnet**, daß der das Dichtelement bildende Bereich durch eine kleine Zwischenplatte verstärkt ist.
